(19) **Europäisches Patentamt / European Patent Office / Office européen des brevets**

(11) **EP 4 656 702 A1**

(12) **EUROPEAN PATENT APPLICATION**

(43) Date of publication:
**03.12.2025   Bulletin 2025/49**

(21) Application number: **24178454.5**

(22) Date of filing: **28.05.2024**

(51) International Patent Classification (IPC):
**C09K 5/06** $^{(2006.01)}$

(52) Cooperative Patent Classification (CPC):
**C09K 5/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ETH Zurich**
**8092 Zurich (CH)**

(72) Inventor: **YAN, Wenqing**
**8046 Zürich (CH)**

(54) **SOLID-SOLID PHASE CHANGE MATERIAL**

(57)    A material for storing thermal energy comprises or consists of a crosslinked polymer, wherein the crosslinked polymer comprises backbone chains, crosslinking chains, and side chains. The crosslinking chains link the backbone chains to one another. The side chains are attached to one site of the backbone chains. The side chains comprise a phase-change moiety, and wherein the phase-change moiety is configured to change between a first solid state and a second solid state.

EP 4 656 702 A1

**Description**

TECHNICAL FIELD

The present invention relates to a material for storing thermal energy according to claim 1, to the use of such a material for storing thermal energy according to claim 13, to a heat-storage object comprising such a material according to claim 14, and to a method for producing such a material according to claim 15.

PRIOR ART

Phase change materials (PCMs) have the unique ability to store and release thermal energy as they undergo a phase transition between different phases. This change of state encompasses various phase transitions, such as solid-liquid, solid-gas, liquid-gas, solid-solid, and crystalline solid to amorphous solid. PCMs are considered sustainable and beneficial for heating and cooling, for their high energy efficiency, reduced energy consumption, temperature regulation, long lifespan, reduced HVAC requirements, non-toxic and environmentally friendliness.

Current industrial-phase change materials (PCMs) used for cooling applications do offer benefits, but they also come with certain disadvantages. Here are some of the drawbacks associated with the use of traditional PCMs for cooling:

Encapsulation complexity: Many traditional PCMs feature liquid-solid phase transition so they require encapsulation to prevent leakage during phase transitions. The encapsulation process can be complex, adding to the overall manufacturing cost and potentially increasing the size of the cooling solution.

High cost: The production and encapsulation of certain PCMs can be costly, especially if specialized materials and processes are required. This can impact the affordability of PCM-based cooling solutions.

Low thermal conductivity: Some traditional PCMs may have relatively low thermal conductivity, which can limit their effectiveness in rapidly transferring heat away from the target components, especially in high-power applications.

Compatibility and Integration: Integrating traditional PCMs into existing cooling systems or structures may pose compatibility challenges. Adapting these materials to different form factors and equipment configurations can be complex.

Environmental Impact: Certain traditional PCMs, especially those containing hazardous materials or chemicals, can have environmental implications during production, usage, or disposal.

Limited latent heat: Some PCMs have a narrow temperature range within which they undergo phase transitions. This limitation can restrict their applicability to specific cooling requirements and temperature ranges.

Bulkiness: The need for encapsulation and additional layers can make traditional PCM-based cooling systems bulkier, impacting space and design considerations

The adoption of PCMs has been somewhat restrained by inherent drawbacks associated with specific PCM phase changes. These drawbacks encompass volumetric fluctuations, gradual transitions, and potential fluidity during the liquid state phase. For instance, EP 1 857 520 A1 and EP 1 484 378 A1 disclose solid-liquid phase change materials. However, practical applications of these materials encounter challenges related to leakage.

SUMMARY OF THE INVENTION

It is an object of the present invention to overcome the drawbacks of the prior art. In particular, it is an object to provide a material for storing thermal energy that is leakproof.

This object is achieved with a material according to claim 1. That is, a material for storing thermal energy comprising or consisting of a crosslinked polymer is provided. The crosslinked polymer comprises backbone chains, crosslinking chains, and side chains. The crosslinking chains link the backbone chains to one another. The side chains are attached to one site of the backbone chains. The side chains comprise a phase-change moiety, and wherein the phase-change moiety is configured to change between a first solid state and a second solid state.

The first solid state and the second solid state can be a fully solid state, a semisolid state, an amorphous solid state, a crystalline solid state, or a mesomorphic state such as a glassy state, an elastomeric state, a powdered state or a granular state, etc.

The phase-change moiety being in the crystalline state is understood as being a solid whose constituents are arranged in a highly ordered microscopic structure forming a crystal lattice that extends in all directions.

The phase-change moiety being in the amorphous state is understood as being a solid that lacks the long-range order of a crystal. The amorphous state can thus likewise be called a non-crystalline solid state.

The phase-change moiety being in the mesomorphic state is understood as being in an intermediate state between the solid state and a liquid state. Examples of mesomorphic states are semisolid, glassy, elastomeric, powdered, or granular states.

In other words, the phase-change moiety is preferably self-supporting, i.e., configured to retain its shape and/or the phase-change moiety preferably does not flow. Again in other words, the phase-change moiety is preferably configured such that transitions into a liquid state do not occur.

Hence, the material according to the invention preferably is a solid-solid phase change material (SSPCM) that is configured to undergo phase transitions between different solid states such as between either crystalline and amorphous states, or between two crystalline or two amorphous states, or even between a solid state and a mesomorphic state.

The material is thus particularly preferably configured to experience phase transitions exclusively within solid states, i.e., solid-solid phase transitions, wherein no liquid-solid phase change takes place.

As such, the material preferably is leakproof and/or does not require any encapsulation or the like to prevent any leakage during phase transitions. This reduces manufacturing complexity and costs and prevents the risk of hazardous chemicals leaking into the ecosystem.

During the transition of the phase-change moiety between the first state and the second state, the phase-change moiety and thus the material releases or absorbs energy. That is, the phase change moiety can transform from the first state such as a crystalline state to the second an amorphous state while absorbing thermal energy. Consequently, the material can be used for cooling purposes. In other words, the material is configured for cooling. When the material changes from the second state such as the amorphous state to the first state such as the crystalline state, it releases thermal energy, i.e., heat. Consequently, the material can be used for heating purposes. In other words, the material is configured for heating.

The side chains preferably have a degree of polymerization being 4 or more, such as 20 or more, for instance 40 or more. Additionally or alternatively, a number-average molecular weight of the side chains is preferably 500 or more, such as 1000 or more, for instance 2000 or more. In this regard it is furthermore preferred that the side chains are polyethers having a number of repeating units being equal to or larger than 4, for instance polyethylene glycol (PEG), see also further below.

However, and as will be explained in greater detail below with respect to conceivable side chains-forming compounds, other degrees of polymerization and number-average molecular weights of the side chains are likewise preferred.

The degree of polymerization of a side chain corresponds to the number of monomeric units in the side chain.

The number-average molecular weight of the side chain can also be referred to as the average length of the side chain.

The degree of polymerization of the side chains were found to determine thermal properties of the material. Namely, as the number-average molecular weight of the side chains comprising the phase-change moiety increases (indicating longer chains), the melting temperature increases. This is primarily due to the increased van der Waals forces between the longer chains, which require more energy to overcome. The longer chains also tend to have more entangled molecular structures. The formation and disruption of the ordered structure require more energy, thus shifting the transition temperatures higher, exhibiting higher onset temperatures for both amorphization and crystallization.

SSPCM with longer phase change sidechains exhibits lower supercooling temperatures because their increased molecular weight and chain interactions facilitate easier nucleation (the initial step in the formation of a crystal structure), thereby reducing the temperature range over which the crystalline can remain supercooled, and hence resulting in lower percentage of heat loss ($\eta$, %), which can be calculated via equation: $\eta = \frac{\Delta H_a - \Delta H_c}{\Delta H_a} \times 100\%$ .

There are various methods for determining a degree of polymerization that are well-known in the art. For instance, in the present invention, the backbone chains can be crosslinked during polymerization and form a network, see also further below. In this case, the standard methods, including Gel Permeation Chromatography (GPC), End-Group Analysis, Nuclear Magnetic Resonance (NMR) Spectroscopy cannot be used due to solubility issues. Instead, the polymerization kinetics is analysed with linear chains under same condition by using 1H-NMR and GPC according to ASTM D5296. "Linear chains" mean the polymer chains of the crosslinked polymer according to the invention, however without the side chains and the crosslinking chains. That is, a comparable polymerization kinetics is assumed for said linear chains and the crosslinked polymer according to the invention, manufactured under the same polymerization conditions.

A degree of polymerization of the crosslinking chains preferably is 1 or more, such as 4 or more for instance 10 or more. Additionally or alternatively, a degree of crosslinking preferably is in the range of 0.001% to 10%. Additionally or alternatively, a degree of crosslinking can be 0.01% or more, such as at least 0.05% or at least 1% or at least 5 %.

Additionally or alternatively, a number-average molecular weight of the crosslinking chains can be 300 or more, for instance 500 or more such as 550.

To this end it is further preferred that the crosslinking chains correspond to poly(ethylene glycol) dimethacrylate (EGDMA) and that the backbone chains comprising the side chains correspond to polyethylene glycol methyl ether methacrylate (POEGMA).

The degree of crosslinking is understood as the percentage of backbone chains that are interconnected, i.e., linked, by the crosslinking chains.

The degree of crosslinking is typically defined by the weight ratio or percentage of a crosslinking-chains forming compound to a total weight of the compounds forming the crosslinked polymer or the polymer network, respectively. Said compounds correspond to the backbone-chains forming compounds, the crosslinking-chains forming compounds, and the side-chains forming compounds, see also further below. To this end the backbone-chains forming compounds and the side-chains forming compounds can be individual compounds or a "common compound", i.e. the side-chains can be part of the backbone-chains forming compounds, or, in other words, the side-chains can be connected to the backbone-chains forming monomers, see also further below.

The degree of polymerization of the crosslinking chains were found to determine thermal properties of the material. Namely, when the degree of crosslinking and degree of polymerization of the side chains are constant, the higher the degree of polymerization of the crosslinking-chains forming compound is, a higher melting temperature ($T_{a,peak}$, °C), a higher onset temperature of amorphization ($T_{a,onset}$, °C) and crystallization ($T_{c,onset}$, °C), a higher enthalpy of amorphization ($\Delta H_a$) and crystallization ($\Delta H_c$), a lower supercooling temperature and a lower heat loss were determined in the material. It is assumed that a higher degree of polymerization of the crosslinking-chains forming compound generally leads to an increase in intermolecular forces such as van der Waals forces or hydrogen bonds, depending on the chemical nature of the chains, and space for an efficient phase transition process. This increased molecular entanglements and intermolecular forces require more heat to initiate and complete both the amorphization and crystallization processes, thereby elevating the onset and peak temperatures of these transitions. Supercooling is the temperature range over which a material remains in a metastable, non-crystalline state upon cooling. Larger molecular space can increase the mobility of the polymer chains, so the material can more promptly revert to its crystalline state, minimizing the supercooling range, and hence, a lower heat loss can be obtained.

As the material undergoes its phase transition, it absorbs heat, which can be detected as an endothermic peak on a DSC thermogram. The temperature at the maximum point of this endothermic peak is taken as amorphization temperature ($T_{a,peak}$, °C). This is the temperature at which the energy absorption (and thus the phase transition) is most intense.

The onset temperature of amorphization ($T_{a,onset}$, °C) can be identified according to the standard ASTM D3418-21.

The onset temperature of crystallization ($T_{c,onset}$, °C) can be identified according to the standard ASTM D3418-21.

To determine the enthalpy of amorphization $\Delta Ha$ (J/g), the area under the endothermic peak can be integrated to quantify the energy absorbed by the material during the transition. This energy is normalized by the mass of the material sample to obtain the enthalpy change in Joules per gram.

To determine the enthalpy of crystallization $\Delta Hc$ (J/g), the area under the exothermic peak can be integrated to determine the energy released during the crystallization. This value is normalized by the mass of the material sample to get the enthalpy change in Joules per gram.

The onset temperature of crystallization (Tc) can be measured during the cooling phase, i.e. the period during which the temperature of the material sample is lowered. The onset temperature of amorphization (Ta) is preferably measured during a heating phase, i.e. the period during which the temperature of the material sample is increased. An extent of supercooling ($\Delta T$, °C) can be calculated as the difference $\Delta T = T_{a,onset} - T_{c,onset}$.

That is, the supercooling of the material can be determined by measuring the onset temperature of amorphization. To this end the material sample can be heated until it reaches or surpasses the point where it transitions from a solid crystalline state back into a less ordered, amorphous state.

The material preferably further comprises free chains. The free chains are preferably not chemically bonded such as covalently bonded to the backbone chains and/or to the side chains. Additionally or alternatively, the free chains and the crosslinked polymer can be configured to exhibit intramolecular forces such as hydrogen bonds, hence not tend to leak. In a sense, the free chains can be seen as "free" components or additives to the crosslinked polymer.

Additionally or alternatively, the free chains preferably have a molecular weight of 5000 g/mol or more, such as 8000 g/mol or more. That is, the free chains preferably have a high molecular weight. In this way, overall thermal energy storage properties such as the latent heat of the material can be increased.

Additionally or alternatively, a weight percentage of the free chains with respect to the total weight of the compounds providing the material preferably is 10% or more, for instance 20% or more, such as 50 %, or more. The "compounds providing the material" are understood as any compounds that are added for manufacturing the material, i.e., the compounds forming the crosslinked polymer, and any further compounds of the material such as compounds forming the free chains or additives, see also further below.

The free chains can be polymers, for instance polymers comprising at least one phase-change moiety. For example, the free chains can be polyether chains, for instance polyethylene glycol (PEG) chains. In particular, the free chains can be PEG chains with a molecular weight of 5000 g/mol or more such as 8000 g/mol or more.

However, other free chains are likewise conceivable. For instance, the free chains can be other components than polymers, for example organic PCMs such as alkanes, for instance acyclic saturated hydrocarbons or n-alkane hydrocarbons, fatty acids, or biobased PCMs like bio-oils and plant-based substances, etc.

The backbone chains together with the side chains preferably have a total amount by weight of 99 % or less, for instance 90 %, with respect to a total weight of the compounds forming the crosslinked polymer.

Additionally or alternatively, the crosslinked polymer network preferably comprises backbone chains comprising side chains with phase change moieties in an amount by weight of 80 or more, for instance of 99 %, with respect to a total weight of the compounds forming the crosslinked polymer.

Additionally or alternatively, a percentage of a number of repeating units of the backbone chains connected to the side chains comprising the phase-change moiety to a total number of repeating units of the crosslinked polymer preferably is in the range of 80% to 100%, for instance 99 %.

Additionally or alternatively, the crosslinking chains preferably have an amount by weight of 0.001 % or more, for instance 0.01 %, with respect to a total weight of the compounds forming the crosslinked polymer. Additionally or alternatively, the crosslinking chains preferably have an amount by weight of 10 % or less, such as 5 % or less, for instance 1 %, with respect to the total weight of the compounds forming the crosslinked polymer.

Additionally or alternatively, the free chains preferably have an amount by weight in the range of 0 % to 80 %, for instance of 50 %, with respect to the total weight of the compounds providing the material.

Additionally or alternatively, a conversion of the monomers in the polymerization preferably is in the range of 85% to 100%.

The side chains are preferably formed from side chains-forming compounds selected from the group comprising or consisting of:

- alcohols having a number of carbon atoms being equal to or larger than 4, for instance 10 or more such as 14, 16 or 18, a preferred alcohol being a diol such as ethylene glycol, or a fatty alcohol such as octadecanol ($C_{18}H_{38}O$), hexadecanol ($C_{16}H_{34}O$) or tetradecanol ($C_{14}H_{30}O$), and/or
- alkanes, for instance acyclic saturated hydrocarbons or n-alkane hydrocarbons and preferably having a number of carbon atoms being equal to or larger than 5, for instance 10 or more such as 12, 16 or 18, preferred alkanes being dodecane ($C_{12}H_{26}$) or hexadecane ($C_{16}H_{34}$) or octadecane ($C_{18}H_{38}$), and/or
- fatty acids preferably having a number of carbon atoms being equal to or larger than 4, for instance 10 or more, such as 12, 16 or 18, preferred fatty acids being saturated fatty acids such as lauric acid ($C_{12}H_{24}O_2$), palmitic acid ($C_{16}H_{32}O_2$) or stearic acid ($C_{18}H_{36}O_2$), and/or
- esters having a number of carbon atoms being equal to or larger than 4, for instance 10 or more such as 15, 17 or 20, preferred esters being butyl laurate ($C_{15}H_{30}O_2$), methyl palmitate ($C_{17}H_{34}O_2$) or ethyl stearate ($C_{20}H_{40}O_2$), and/or
- polyethers having a number of repeating units being equal to or larger than 4, for instance 10 or more, a preferred polyether being polyethylene glycol, for instance with a molecular weight of 6000 g/mol or 8000 g/mol 20000 g/mol, and/or
- derivatives thereof, and/or
- mixtures thereof.

The crosslinking chains are preferably formed from crosslinking-chains forming compounds selected from the group comprising or consisting of di- or multi-methacrylates and/or di- or multi-acrylates, and wherein crosslinking preferably undergoes in-situ radical polymerizations with backbone-chains forming monomers. Additionally or alternatively, the crosslinking chains are preferably formed from crosslinking-chains forming compounds selected from the group comprising or consisting of difunctional or multifunctional molecules comprising functional groups able to undergo a covalent-bonded or non-covalent-bonded chemical reaction with the backbone chains, and wherein crosslinking preferably undergoes post modification reactions. These reactions preferably include esterification, benzophenone photo-crosslinking, Friedel-Crafts acylation, click chemistry reactions, epoxy-amine reaction, etc.

That is, the crosslinking chains can be formed from crosslinking-chains forming compounds that comprise or consist of di- or multifunctional monomers or di- or multifunctional molecules that could be crosslinked or polymerized with compounds such as monomers forming the backbone chains during polymerization of the compounds or monomers, respectively.

The crosslinking-chains forming compounds can comprise any functional group that can undergo a covalent-bonded or non-covalent-bonded chemical reactions.

Examples of covalent-bonded reactions are: esterification, benzophenone photo-crosslinking, Friedel-Crafts acylation, click chemistry, Diels-Alder reaction, epoxy-amine reaction, nitration, sulfonation, reduction of carbonyls, oxidation of alcohols, hydroboration-oxidation, Grignard reaction, Aldol reaction, Wittig reaction, Heck Reaction, Sharpless epoxidation, coupling reactions, reductions, Gabriel Synthesis, etc.

Examples of non-covalent-bonded reactions are: hydrogen bonding, Π-Π interactions, hydrophobic effects, host-guest interaction, etc.

The backbone chains are preferably formed from backbone-chains forming compounds selected from the group comprising or consisting of:

- carboxylic acids, preferably unsaturated carboxylic acids such as acrylic acid or methacrylic acids, and/or
- unsaturated, aromatic hydrocarbons, for instance styrene, and/or
- amide groups, and/or
- carbonate groups, and/or
- ester groups, and/or
- silanes, and/or
- acrylonitrile groups, and/or
- imide groups, and/or
- isocyanate groups, and/or
- anhydride groups, and/or
- epoxy groups, and/or
- hydroxyl groups, and/or
- derivatives thereof such as acrylates or methacrylates, and/or
- mixtures thereof.

The backbone chains are preferably selected from the group comprising or consisting of: polyurethane and/or polystyrene and/or polyamides and/or polycarbonates and/or polyesters and/or polyacrylonitrile and/or polyimides and/or mixtures thereof.

The material is preferably configured to absorb and/or release a latent heat of at least 130 J/g, preferably of at least 160 J/g such as 210 J/g upon a change of the phase-change moiety between the first solid state and the second solid state. Additionally or alternatively, the material is preferably configured to exhibit a heat loss of 15 % or less, such as 10 % or less, for instance 8 % or less or 5 % or less upon a change of the phase-change moiety between the first solid state and the second solid state. Additionally or alternatively, the material is preferably configured to exhibit a supercooling temperature of 25 °C or less, for instance 20 °C or less, such as 12.5 °C or less upon a change of the phase-change moiety between the first solid state and the second solid state. A lower supercooling temperature can be advantageous because it makes the material more stable and reliable for thermal storage purposes.

The crosslinked polymer preferably further comprises at least one additive selected from the group comprising or consisting of flame retardants and/or heat conductive agents and/or filler and/or fibers and/or elastomer and/or plasticizer and/or processing aid and/or mold release and/or lubricant and/or dye and/or pigment and/or antixoidants and/or light stabilizers.

Various flame retardants are conceivable and well-known in the art. For instance, the flame retardant can be a mineral, an organohalogen compound, an organophosphorous compound, or an organic compound. Examples of minerals are aluminium hydroxide, magnesium hydroxide, red phosphorous, boron compounds, etc. Examples of organohalogen compounds are organochlorines such as chlorendic acid, organobromines such as decabromidiphenyl ether, etc. Examples of organophosphorous compounds are organophosphates. Examples of organic compounds are carboxylic acids such as dicarboxylic acid.

In another aspect, the material as described above is used for storing thermal energy.

Any statements made herein with regard to the material as such preferably likewise apply to the use of the material and vice versa.

In another aspect, a heat-storage object comprising the material as described above is provided. The material is preferably formed into a film or sheet. Additionally or alternatively, the heat-storage object preferably is a fabric, a cloth, a building material, an electric appliance, or an electronic appliance.

That is, the material according to the invention can be used in a heat storage object, such as in the form of a film or sheet in an electric or electronic appliance for thermal regulation, or in a temperature-regulating fabric or cloth, or in a building material for passive building design. Various other applications that require a temperature-regulation and/or a heat-storage are of course likewise conceivable.

Any statements made herein with regard to the material as such preferably and the use of the material preferably likewise apply to the heat-storage object comprising the material and vice versa.

In another aspect, a method for producing the material for thermal energy storage as described above is provided. Said method comprises the step of polymerizing backbone-chains forming compounds in the presence of one or more crosslinking-chains forming compounds to produce a crosslinked polymer. One or more side chains-forming compounds comprising the phase-change moiety are attached to the backbone-chains forming compounds prior to their polymerisation. Alternatively, one or more side chains-forming compounds comprising the phase-change moiety are attached to the backbone chains after the polymerisation of the backbone chains forming compounds.

That is, the side chains can be attached to the compounds such as monomers of the backbone chains before the polymerisation of the compounds or monomers, i.e., prior to the formation of the backbone chains, or after the polymerization of the compounds or monomers, i.e., after the formation of the backbone chains.

The crosslinking chains-forming compounds can link the backbone-chains forming compounds to one another during their polymerization of after their polymerization.

Various polymerization reaction mechanisms are conceivable and are well-known to the skilled in the art. For instance, the polymerization can be a radical polymerization or a step growth polymerization.

Any statements made herein with regard to the material as such preferably, the use of the material and the heat-storage object comprising the material preferably likewise apply to the method of producing the material and vice versa.

Materials and Methods

In the following, examples of materials, their method of production, and characterisations are given. It is noted that these examples are provided as representative of the various combinations and embodiments that may be created through the specific features described above and are not meant to be exclusive as the scope of the previous descriptions of invention.

The materials were produced as follows: 10 mL of polyethylene glycol methyl ether methacrylate (POEGMA; average Mn ~ 300 g/mol or 950 g/mol or 2000g/mol), certain weight percentage (0.01 wt% or 0.05 wt% or 0.5 wt% or 1 wt% or 2 wt% or 5 wt% or 10 wt% with respect to the total weight of the compounds forming the crosslinked polymer) of poly(ethylene glycol) dimethacrylate (PEGDMA; average Mn ~ 300 g/mol, 550 g/mol, 3400g/mol), with 0.1 mol% azobisisobutyronitrile with respect to the total weight of compounds forming the crosslinked polymer are mixed. Polyethylene glycol (PEG; molecular weight 1000 g/mol, or 2000 g/mol, or 4000g/mol, or 6000 g/mol) was added as free chains with different weight percentages (50 wt% for 1000 g/mol or 2000 g/mol or 4000 g/mol, 10wt% or 20wt% or 50wt% or 65wt% or 80wt% or 90wt% for 6000 g/mol). The polymerization was conducted overnight either under UV irradiation (UVACUBE 400, sunlight spectrum numbered with ') or under heat (120°C). Detailed parameters obtained from characterisations of the materials are listed in the chapter "results and discussions" further below.

Samples of the materials were provided in the form of films of a weight between 5-10 mg, and a Differential scanning calorimetry (DSC) analysis was performed for each film using a Q2000 (TA Instrument) in a N2 atmosphere (50 mL min$^{-1}$). Tzero@hermetic aluminium pan was used as a sample holder for the DC measurements. Generally, the samples were run according to the following process for the crystallinity and activation energy ($\Delta Ea$): 1: Equilibrate at -60.00 °C; 2: Ramp 10.00 °C min$^{-1}$ to 120.00 °C; 3: Ramp 10.00 °C min$^{-1}$ to -60.00 °C; 4: Ramp 10.00 °C min$^{-1}$ to 120.00 °C. Melting temperature ($T_{a,peak}$, °C), onset temperature of amorphization ($T_{a,onset}$, °C), onset temperature of crystallization ($T_{c,onset}$, °C), enthalpy of amorphization ($\Delta Ha$), and enthalpy of crystallization ($\Delta Hc$) were obtained from the instrument according to standard ASTM D3418-21. The extent of supercooling ($\Delta T$, °C) was evaluated by the following equation: Supercooling $\Delta T = T_{a,onset} - T_{c,onset}$. The percentage of heat loss ($\eta$, %) was calculated via equation:

$$\eta = \frac{\Delta H_a - \Delta H_c}{\Delta H_a} \times 100\%$$

Results and Discussions

Example 1 - Preparation of solid-solid phase change materials (SSPCM) shows latent heat of 211.1 J/g. The SSPCM samples were polymerized via heating.

| | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| SSPCM 8 | n=43 | 0.5 % | n=10 | 50% (2000) | 49.72 | 36.63 |
| | $T_{c,onset}$ (°C) | Supercooling (°C) | $\Delta H_a$ (J/g) | $\Delta H_c$ (J/g) | Heat loss (%) | |
| | 24.11 | 12.52 | 211.1 | 197.7 | 6.34 | |

Examples 2, 3 and 4 given below show how the degrees of polymerization of the side chains comprising the phase-change moiety influence thermal properties of the solid-solid phase change materials (SSPCM). As the molecular weight of the side chains comprising the phase-change moiety increases (indicating longer chains), the melting temperature increases. This is primarily due to the increased van der Waals forces between the longer chains, which require more energy to overcome. The longer chains also tend to have more entangled molecular structures. The formation and disruption of the ordered structure require more energy, thus shifting the transition temperatures higher, exhibiting higher onset temperatures for both amorphization and crystallization.

SSPCM with longer side chains comprising the phase-change moiety exhibit lower supercooling temperatures because their increased molecular weight and chain interactions facilitate easier nucleation (the initial step in the formation of a crystal structure), thereby reducing the temperature range over which the crystalline can remain supercooled, and

$$\eta = \frac{\Delta H_a - \Delta H_c}{\Delta H_a} \times 100\%$$

hence resulting in lower heat loss, which was calculated via equation: .

Example 2 - Preparation of solid-solid phase change materials (SSPCM) presenting different degrees of polymerization of the side chains, with a degree of crosslinking of 0.5 % and a degree of polymerization of the crosslinking chains of n=4, wherein n corresponds to the degree of polymerization in the particular chain. Here, n=4 implies that the degree of polymerization of the crosslinking chains is 4. The SSPCM samples were polymerized via UV irradiation.

| SSPCM 1' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=4 | 0.5 % | n=4 | - | - | - |
| | $T_{c,onset}$ (°C) | Supercooling | $\Delta H_a$ (J/g) | $\Delta H_c$ (J/g) | Heat loss (%) | |
| | - | - | - | - | - | |
| SSPCM 4' | Sidechain length | Crosslinking degree | Length of cross-linking chain | Free PEG 6000 | Amorphization temperature ($T_{a,peak}$, °C) | $T_{a,onset}$ (°C) |
| | n=20 | 0.5 % | n=4 | - | 36.69 | 28.16 |
| | $T_{c,onset}$ (°C) | Supercooling (°C) | $\Delta H_a$ (J/g) | $\Delta H_c$ (J/g) | Heat loss (%) | |
| | ~0 | ~28 | 99.47 | 79.60 | 24.96 | |
| SSPCM 7' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.5 % | n=4 | - | 48.30 | 44.52 |
| | $T_{c,onset}$ (°C) | Supercooling | $\Delta H_a$ (J/g) | $\Delta H_c$ (J/g) | Heat loss (%) | |
| | 24.46 | 20.06 | 115.3 | 112.1 | 2.85 | |

Example 3 - Preparation of solid-solid phase change materials (SSPCM) presenting different degrees of polymerization of the side chains, with a degree of crosslinking of 1 % and a degree of polymerization of the crosslink chains of n=4. The SSPCM samples were polymerized via UV irradiation.

| SSPCM 2' | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| | n=4 | 1 % | n=4 | - | - | - |
| | $T_{c,onset}$ (°C) | Supercooling | $\Delta H_a$ (J/g) | $\Delta H_c$ (J/g) | Heat loss (%) | |
| | - | - | - | - | - | |

(continued)

| SSPCM 5' | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| | n=20 | 1 % | n=4 | - | 40.73 | 26.81 |
| | $T_{c,onset}$ (°C) | Supercooling | $\Delta H_a$ (J/g) | $\Delta H_c$ (J/g) | Heat loss (%) | |
| | ~-10 | ~36 | 98.69 | 73.60 | 34.09 | |

| SSPCM 8' | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| | n=43 | 1 % | n=4 | - | 48.62 | 43.65 |
| | $T_{c,onset}$ (°C) | Supercooling | $\Delta H_a$ (J/g) | $\Delta H_c$ (J/g) | Heat loss (%) | |
| | 24.52 | 19.13 | 118.7 | 113.3 | 4.77 | |

Example 4 - Preparation of solid-solid phase change materials (SSPCM) presenting different degrees of polymerization of sidechains, with a degree of crosslinking of 5 % and a degree of polymerization of the crosslinking chains of n=4. The SSPCM samples were polymerized via UV irradiation.

| SSPCM 3' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=4 | 5 % | n=4 | - | - | - |
| | $T_{c,onset}$ (°C) | Supercooling | $\Delta H_a$ (J/g) | $\Delta H_c$ (J/g) | Heat loss (%) | |
| | - | - | - | - | - | |

| SSPCM 6' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=20 | 5 % | n=4 | - | 38.25 | 24.70 |
| | $T_{c,onset}$ (°C) | Supercooling (°C) | $\Delta H_a$ (J/g) | $\Delta H_c$ (J/g) | Heat loss (%) | |
| | -18.45 | 43.15 | 85.90 | 56.86 | 51.07 | |

| SSPCM 9' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 5 % | n=4 | - | 55.04 | 44.74 |
| | $T_{c,onset}$ (°C) | Supercooling | $\Delta H_a$ (J/g) | $\Delta H_c$ (J/g) | Heat loss (%) | |
| | 22.72 | 22.02 | 116.2 | 106.4 | 9.21 | |

Examples 5, 6 and 7 show how degrees of polymerization of the crosslinking chains influence thermal properties of the solid-solid phase change materials (SSPCM). When the degree of crosslinking and the degree of polymerization of the side chains are constant, the higher the degree of polymerization of the crosslinking chain is, the higher the melting temperature ($T_{a,peak}$, °C), the higher the onset temperature of amorphization ($T_{a,onset}$, °C) and crystallization ($T_{c,onset}$, °C), the higher the enthalpy of amorphization ($\Delta H_a$) and crystallization ($\Delta Hc$), and the lower the supercooling temperature and the lower heat loss that were obtained. The reason could be that a higher degree of polymerization of the crosslinking agent generally leads to an increase in intermolecular forces (like van der Waals forces or hydrogen bonds, depending on the chemical nature of the chains) and space for an efficient phase transition process. This increased molecular entanglement and intermolecular for requires more heat to initiate and complete both the amorphization and crystallization processes, thereby elevating the onset and peak temperatures of these transitions. Supercooling is the temperature range over which a material remains in a metastable, non-crystalline state upon cooling. Larger molecular space can increase the mobility of the polymer chains, so the material can more promptly revert to its crystalline state, minimizing the supercooling range, and hence, a lower heat loss can be obtained.

Example 5 - Preparation of solid-solid phase change materials (SSPCM) presenting different degrees of polymerization of the crosslinking chains, with a degree of crosslinking of 0.5 % and a degree of polymerization of the side chains of n=20. The SSPCM samples were polymerized via UV-induced polymerization.

| | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| SSPCM 4' | n=20 | 0.5 % | n=4 | - | 36.69 | 28.16 |
| | $T_{c,onset}$ (°C) | Supercooling | $\Delta H_a$ (J/g) | $\Delta H_c$ (J/g) | Heat loss (%) | |
| | ~0 | ~28 | 99.47 | 79.60 | 24.96 | |
| SSPCM 10' | Sidechain length | Crosslinking degree | Length of cross-linking chain | Free PEG 6000 | Amorphization temperature ($T_{a,peak}$, °C) | $T_{a,onset}$ (°C) |
| | n=20 | 0.5 % | n=10 | - | 39.19 | 31.79 |
| | $T_{c,onset}$ (°C) | Supercooling | $\Delta H_a$ (J/g) | $\Delta H_c$ (J/g) | Heat loss (%) | |
| | 8.96 | 22.83 | 98.31 | 89.45 | 9.90 | |

Example 6 - Preparation of solid-solid phase change materials (SSPCM) presenting different degrees of polymerization of the crosslinking chains, with a degree of crosslinking of 5 % and a degree of polymerization of the side chains of n=20. The SSPCM samples were polymerized via UV irradiation.

| SSPCM 6' | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| | n=20 | 5 % | n=4 | - | 38.25 | 24.70 |
| | $T_{c,onset}$ (°C) | Supercooling | $\Delta H_a$ (J/g) | $\Delta H_c$ (J/g) | Heat loss (%) | |
| | -18.45 | 43.15 | 85.90 | 56.86 | 33.80 | |
| SSPCM 12' | Sidechain length | Crosslinking degree | Length of cross-linking chain | Free PEG 6000 | Amorphization temperature ($T_{a,peak}$, °C) | $T_{a,onset}$ (°C) |
| | n=20 | 5 % | n=10 | - | 43.76 | 34.77 |
| | $T_{c,onset}$ (°C) | Supercooling | $\Delta H_a$ (J/g) | $\Delta H_c$ (J/g) | Heat loss (%) | |
| | 9.47 | 25.30 | 105.7 | 95.93 | 9.24 | |

Example 7 - Preparation of solid-solid phase change materials (SSPCM) presenting different degrees of polymerization of the crosslinking chains, with a degree of crosslinking of 0.5 % and a degree of polymerization of the side chains of n=43. The SSPCM samples were polymerized via UV irradiation.

| SSPCM 7' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 0.5 % | n=4 | - | 48.30 | 44.52 |
| | $T_{c,onset}$ (°C) | Supercooling | $\Delta H_a$ (J/g) | $\Delta H_c$ (J/g) | Heat loss (%) | |
| | 24.46 | 20.06 | 115.3 | 112.1 | 2.77 | |

(continued)

| SSPCM 12' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 0.5 % | n=70 | - | 52.64 | 49.04 |
| | $T_{c,onset}$ (°C) | Supercooling | $\Delta H_a$ (J/g) | $\Delta H_c$ (J/g) | Heat loss (%) | |
| | 27.23 | 21.81 | 150.1 | 146.2 | 2.5 | |

Example 8 shows how degrees of crosslinking influence thermal properties of solid-solid phase change materials (SSPCM). When the degree of polymerization of the crosslinking chain and the degree of polymerization of the side chains are constant, the lower the degree of crosslinking is, the higher the melting temperature ($T_{a,peak}$, °C), the higher the onset temperature of amorphization ($T_{a,onset}$, °C) and crystallization ($T_{c,onset}$, °C), the higher the enthalpy of amorphization ($\Delta H_a$) and crystallization ($\Delta Hc$), and the lower the supercooling temperature and the lower the heat loss that were obtained.

This is because a lower degree of cross-linking results in a polymer network with more flexibility and more mobility for the SSPCM side chains. The melting temperature is higher because the side chains comprising the phase-change moiety are able to organize into a more ordered structure due to having more freedom of movement, which requires more energy to break apart during melting. With a lower degree of crosslinking, the SSPCM chains have greater mobility, allowing them to more readily align and organize into crystalline structures. This greater ability to organize increases the onset temperatures for both crystallization (as chains more easily find their crystalline configuration) and amorphization (as more energy is required to disrupt the organized state). Higher energies are required for both process, as more freely moving side chains can undergo more significant structural rearrangements during these transitions, involving more substantial energy changes. Side chains comprising the phase-change moiety can more easily nucleate and grow into crystals due to less restriction from the polymer network structure. This facilitates crystallization at temperatures closer to the material's natural freezing point, thus reducing the extent of supercooling and heat loss.

Example 8 - Preparation of solid-solid phase change materials (SSPCM) presenting different degrees of crosslinking, with a degree of polymerization of the crosslinking chains of n= 4 and a degree of polymerization of the side chains of n=20. The SSPCM samples were polymerized via UV irradiation.

| SSPCM 4' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=20 | 0.5 % | n=4 | - | 36.69 | 28.16 |
| | $T_{c,onset}$ (°C) | Supercooling | $\Delta H_a$ (J/g) | $\Delta H_c$ (J/g) | Heat loss (%) | |
| | ~0 | ~28 | 99.47 | 79.60 | 19.98 | |
| SSPCM 5' | Sidechain length | Crosslinking degree | Length of cross-linking chain | Free PEG 6000 | Amorphization temperature ($T_{a,peak}$, °C) | $T_{a,onset}$ (°C) |
| | n=20 | 1 % | n=4 | - | 40.73 | 26.81 |
| | $T_{c,onset}$ (°C) | Supercooling (°C) | $\Delta H_a$ (J/g) | $\Delta H_c$ (J/g) | Heat loss (%) | |
| | ~-10 | ~36 | 98.69 | 73.60 | 25.42 | |
| SSPCM 6' | Sidechain length | Crosslinking degree | Length of cross-linking chain | Free PEG 6000 | Amorphization temperature ($T_{a,peak}$, °C) | $T_{a,onset}$ (°C) |
| | n=20 | 5% | n=4 | - | 38.25 | 24.70 |
| | $T_{c,onset}$ (°C) | Supercooling | $\Delta H_a$ (J/g) | $\Delta H_c$ (J/g) | Heat loss (%) | |
| | -18.45 | 43.15 | 85.90 | 56.86 | 33.80 | |

Examples 9, 10 and 11 show how the addition of free chains, here of free chains comprising a phase-change moiety, namely PEG, influence thermal properties of the solid-solid phase change materials (SSPCM). When other molecular parameters are constant, the more free chains are added, the higher the melting temperature ($T_{a,peak}$, °C), the higher the onset temperature of amorphization ($T_{a,onset}$, °C) and crystallization ($T_{c,onset}$, °C), the higher the enthalpy of amorphization ($\Delta H_a$) and crystallization ($\Delta H_c$), and the lower the supercooling temperature and the lower the heat loss that were obtained.

The added free PEG chains feature less restriction compared to the side chains on the polymer network. When the weight percentage of the added free chains is increased, the total weight percentage of the phase-change moieties are increased, resulting in higher onset temperature of amorphization ($T_{a,onset}$, °C) and crystallization ($T_{c,onset}$, °C). These trapped free chains can undergo more significant structural rearrangements during these transitions, involving more substantial energy changes. This facilitates crystallization at temperatures closer to the material's natural freezing point, thus reducing the extent of supercooling and heat loss.

Example 9 - Preparation of solid-solid phase change materials (SSPCM) trapped with different portions of free chains in the form of PEG chains, i.e. free chains comprising a phase-change moiety, with molecular weight of these free PEG chains of 6000 g/mol, a degree of crosslinking of 0.01%, a degree of polymerization of the crosslinking chains of n= 10 and a degree of polymerization of the side chains of n=43. The "portion" of PEG corresponds to the "amount" or weight percentage of PEG with respect to the total weight of the compounds providing the material. The SSPCM samples were polymerized via UV irradiation.

| | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| SSPCM 16' | n=43 | 0.01% | n=10 | - | 51.42 | 46.33 |
| | $T_{c,onset}$ (°C) | Supercooling | $\Delta H_a$ (J/g) | $\Delta H_c$ (J/g) | Heat loss (%) | |
| | 26.60 | 19.73 | 120.3 | 114.7 | 4.65 | |
| SSPCM 18' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 10% | 52.97 | 47.64 |
| | $T_{c,onset}$ (°C) | Supercooling (°C) | $\Delta H_a$ (J/g) | $\Delta H_c$ (J/g) | Heat loss (%) | |
| | 32.63 | 15.01 | 129.2 | 125.1 | 3.17 | |
| SSPCM 20' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 50% | 56.38 | 50.20 |
| | $T_{c,onset}$ (°C) | Supercooling | $\Delta H_a$ (J/g) | $\Delta H_c$ (J/g) | Heat loss (%) | |
| | 29.18 | 21.02 | 138.6 | 135.6 | 2.16 | |
| SSPCM 21' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 65% | 56.77 | 51.25 |
| | $T_{c,onset}$ (°C) | Supercooling | $\Delta H_a$ (J/g) | $\Delta H_c$ (J/g) | Heat loss (%) | |
| | 33.67 | 17.58 | 151.9 | 149.3 | 1.71 | |
| SSPCM 22' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 80% | 59.01 | 54.56 |
| | $T_{c,onset}$ (°C) | Supercooling (°C) | $\Delta H_a$ (J/g) | $\Delta H_c$ (J/g) | Heat loss (%) | |
| | 35.69 | 18.87 | 162.0 | 160.5 | 0.93 | |

(continued)

| SSPCM 23' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 0.01% | n=10 | 90% | 56.81 | 50.80 |
| | $T_{c,onset}$ (°C) | Supercooling (°C) | $\Delta H_a$ (J/g) | $\Delta H_c$ (J/g) | Heat loss (%) | |
| | 34.14 | 16.66 | 172.7 | 165.5 | 4.17 | |

Example 10 - Preparation of solid-solid phase change materials (SSPCM) comprising different amounts of PEG free chains that are trapped in the polymer network, with a molecular weight of the free PEG chains 6000 g/mol, a degree of crosslinking of 0.05%, a degree of polymerization of the crosslinking chains of n=10 and a degree of polymerization of the side chains of n=43. The SSPCM samples were polymerized via UV irradiation.

| SSPCM 17' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 0.05 % | n=10 | - | 51.36 | 46.29 |
| | $T_{c,onset}$ (°C) | Supercooling (°C) | $\Delta H_a$ (J/g) | $\Delta H_c$ (J/g) | Heat loss (%) | |
| | 26.50 | 19.79 | 127.0 | 121.7 | 4.17 | |
| SSPCM 19' | Sidechain length | Crosslinking degree | Length of crosslinking chain | Free PEG 6000 | Amorphization temperature ($T_{a,peak}$, °C) | $T_{a,onset}$ (°C) |
| | n=43 | 0.05 % | n=10 | 10% | 54.41 | 49.21 |
| | $T_{c,onset}$ (°C) | Supercooling (°C) | $\Delta H_a$ (J/g) | $\Delta H_c$ (J/g) | Heat loss (%) | |
| | 30.66 | 18.55 | 131.4 | 126.3 | 3.88 | |

Example 11 - Preparation of solid-solid phase change materials (SSPCM) comprising different amounts of PEG free chains that are trapped in the polymer network, with a molecular weight of free PEG chains 6000 g/mol, a degree of crosslinking of 0.5%, a degree of polymerization of the crosslinking chains of n= 10 and a degree of polymerization of the side chains of n=43. The SSPCM samples were polymerized via heating.

| SSPCM 5 | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| | n=43 | 0.5 % | n=10 | 50% (6000) | 58.92 | 53.57 |
| | $T_{c,onset}$ (°C) | Supercooling (°C) | $\Delta H_a$ (J/g) | $\Delta H_c$ (J/g) | Heat loss (%) | |
| | 34.05 | 19.52 | 173.9 | 165.4 | 4.88 | |

(continued)

| | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| SSPCM 6 | n=43 | 0.5 % | n=10 | 20% (6000) | 55.5 | 51.44 |
| | $T_{c,onset}$ (°C) | Supercooling (°C) | $\Delta H_a$ (J/g) | $\Delta H_c$ (J/g) | Heat loss (%) | |
| | 28.08 | 23.36 | 145.7 | 138.4 | 5.01 | |

Example 12 shows how molecular weights of the added free PEG chains influence thermal properties of solid-solid phase change materials (SSPCM). When other molecular parameters are constant, the higher the molecular weights of the added free PEG chains are, the higher the melting temperature ($T_{a,peak}$, °C), the higher the onset temperature of amorphization ($T_{a,onset}$, °C) and crystallization ($T_{c,onset}$, °C), the higher the enthalpy of amorphization ($\Delta H_a$) and crystallization ($\Delta Hc$), and the lower the supercooling temperature and the lower the heat loss that were obtained.

Similar to the mechanism of how the length of the side chains affects the thermal properties of the SSPCM, higher molecular weights of the added free PEG chains leads to the increased van der Waals forces between the longer free chains, which require more energy to overcome. This also tend to have more entangled molecular structures. The formation and disruption of the ordered structure require more energy, thus shifting the transition temperatures higher, exhibiting higher onset temperatures for both amorphization and crystallization. Longer side chains comprising the phase-change moiety facilitate easier nucleation at the initial step, thereby reducing the temperature range over which the crystalline can remain supercooled, and hence resulting in lower heat loss.

Example 12 - Preparation of solid-solid phase change materials (SSPCM) comprising different amounts of PEG free chains that are trapped in the polymer network, with weight percentage of free phase change PEG chains 50 wt% with respect to the total weight of the compounds providing the material, a degree of crosslinking of 0.5%, a degree of polymerization of the crosslinking chains of n= 10 and a degree of polymerization of the side chains of n=43. The SSPCM samples were polymerized via heating.

| | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| SSPCM 7 | n=43 | 0.5 % | n=10 | 50% (1000) | 54.65 | 50.62 |
| | $T_{c,onset}$ (°C) | Supercooling (°C) | $\Delta H_a$ (J/g) | $\Delta H_c$ (J/g) | Heat loss (%) | |
| | 29.54 | 21.08 | 133.6 | 129.2 | 3.29 | |
| SSPCM 8 | n=43 | 0.5 % | n=10 | 50% (2000) | 49.72 | 36.63 |
| | $T_{c,onset}$ (°C) | Supercooling (°C) | $\Delta H_a$ (J/g) | $\Delta H_c$ (J/g) | Heat loss (%) | |
| | 24.11 | 12.52 | 211.1 | 197.7 | 6.34 | |

(continued)

| | Sidechain length | Crosslinking degree | Length of crosslinking chain | Free PEG 6000 | Amorphization temperature ($T_{a,peak}$, °C) | $T_{a,onset}$ (°C) |
|---|---|---|---|---|---|---|
| SSPCM 9 | n=43 | 0.5 % | n=10 | 50% (4000) | 57.34 | 53.68 |
| | $T_{c,onset}$ (°C) | Supercooling (°C) | $\Delta H_a$ (J/g) | $\Delta H_c$ (J/g) | Heat loss (%) | |
| | 35.46 | 18.22 | 172.7 | 163.6 | 5.26 | |
| SSPCM 5 | Sidechain length | Crosslinking degree | Length of crosslinking chain | Free PEG 6000 | Amorphization temperature ($T_{a,peak}$, °C) | $T_{a,onset}$ (°C) |
| | n=43 | 0.5 % | n=10 | 50% (6000) | 58.92 | 53.57 |
| | $T_{c,onset}$ (°C) | Supercooling (°C) | $\Delta H_a$ (J/g) | $\Delta H_c$ (J/g) | Heat loss (%) | |
| | 34.05 | 19.52 | 173.9 | 165.4 | 4.88 | |

Example 13 shows examples of SSPCM applied to wood substrates. Native wood shows no phase change properties, we graft SSPCM inside wood substrate, resulting in solid-solid phase change wood. In general, the resulted solid-solid phase change wood shows lower melting temperature ($T_{a,peak}$, °C), lower onset temperature of amorphization ($T_{a,onset}$, °C) and crystallization ($T_{c,onset}$, °C), lower enthalpy of amorphization ($\Delta H_a$) and crystallization ($\Delta Hc$), higher supercooling temperature and higher heat loss, compared to pure SSPCM with comparable molecular parameters. This may be due to the decreased portion of phase change materials in the whole system. However, the combined system shows phase change properties.

Example 13 - Preparation of solid-solid phase change materials (SSPCM) applied to wood substrates, with molecular weights of free PEG chains 6000 g/mol, portion of free phase change PEG chains 90 wt%, degree of crosslinking 0.01%, degree of polymerization of crosslinkers n= 10 and degree of polymerization of sidechains n=43. The SSPCM samples were polymerized via UV irradiation.

| | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| Wood | Native wood | | | - | | |
| | $T_{c,onset}$ (°C) | Supercooling (°C) | $\Delta H_a$ (J/g) | $\Delta H_c$ (J/g) | Heat loss (%) | |
| | - | - | 0 | 0 | - | |
| SSPCM 16' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | - | 51.42 | 46.33 |
| | $T_{c,onset}$ (°C) | Supercooling (°C) | $\Delta H_a$ (J/g) | $\Delta H_c$ (J/g) | Heat loss (%) | |
| | 26.60 | 19.73 | 120.3 | 114.7 | 4.65 | |

(continued)

| Wood-SSPCM 1' | Sidechain length | Crosslinking degree | Length of cross-linking chain | Free PEG 6000 | Amorphization temperature ($T_{a,peak}$, °C) | $T_{a,onset}$ (°C) |
|---|---|---|---|---|---|---|
| | n=43 | 0.01% | n=10 | - | 50.16 | 40.47 |
| | $T_{c,onset}$ (°C) | Supercooling (°C) | $\Delta H_a$ (J/g) | $\Delta H_c$ (J/g) | Heat loss (%) | |
| | 18.96 | 21.51 | 56.60 | 50.95 | 9.98 | |
| SSPCM 23' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 90% | 56.81 | 50.80 |
| | $T_{c,onset}$ (°C) | Supercooling | $\Delta H_a$ (J/g) | $\Delta H_c$ (J/g) | Heat loss (%) | |
| | 34.14 | 16.66 | 172.7 | 165.5 | 4.17 | |
| Wood-SSPCM 2' | Sidechain length | Crosslinking degree | Length of cross-linking chain | Free PEG 6000 | Amorphization temperature ($T_{a,peak}$, °C) | $T_{a,onset}$ (°C) |
| | n=43 | 0.01% | n=10 | 90% | 61.46 | 50.28 |
| | $T_{c,onset}$ (°C) | Supercooling (°C) | $\Delta H_a$ (J/g) | $\Delta H_c$ (J/g) | Heat loss (%) | |
| | 34.62 | 15.66 | 100.1 | 96.58 | 3.52 | |

In the following, some further examples of conceivable materials according to the invention are given.

Example 14 - a long-chain hydrocarbon-based solid-solid phase change material was prepared by mixing and polymerizing 99.9 wt% dodecyl methacrylate (CAS 142-90-5) with respect to the total weight of the compounds forming the crosslinked polymer, 0.01 wt% Poly(ethylene glycol) dimethacrylate (CAS 25852-47-5; average Mn 550) with respect to the total weight of the total weight of the compounds forming the crosslinked polymer, and 0.1 mol% azobisisobutyronitrile (CAS 78-67-1).

Example 15 - a flame retardant composite comprising the solid-solid phase change material was prepared by mixing or homogeneously dispersing 49.9 wt% polyethylene glycol methyl ether methacrylate (CAS 9004-74-4; M.W. 5.000) with respect to the total weight of the compounds forming the crosslinked polymer, 0.01 wt% poly(ethylene glycol) dimethacrylate (CAS 25852-47-5; average Mn 550) with respect to the total weight of the compounds forming the crosslinked polymer, 0.1 mol% azobisisobutyronitrile (CAS 78-67-1) together with 50 wt% aluminium hydroxide (CAS 21645-51-2) with respect to the total weight of the added compounds. The resulting composite has flame retardant and phase change properties.

Example 16 - a natural fiber-based solid-solid phase change material was prepared by mixing 99.9 wt% polyethylene glycol methyl ether methacrylate (CAS 9004-74-4; M.W. 5.000) with respect to the total weight of the compounds forming the crosslinked polymer and 0.01 wt% poly(ethylene glycol) dimethacrylate (CAS 25852-47-5; average Mn 550) the total weight of the compounds forming the crosslinked polymer with 0.1 mol% azobisisobutyronitrile (CAS 78-67-1) and polymerizing as a solution. The solution is vacuum infiltrated into delignified spruce under 5mbar overnight. After that, polymerization is conducted in-situ in delignified spruce.

Example 17 - a cooling layer for a battery comprising the solid-solid phase change material was prepared by mixing or homogeneously dispersing 59.9 wt% polyethylene glycol methyl ether methacrylate (CAS 9004-74-4; MW. 5.000) with respect to the total weight of the compounds forming the crosslinked polymer, 0.01 wt% poly(ethylene glycol) dimethacrylate (CAS 25852-47-5; average Mn 550) with respect to the total weight of the compounds forming the crosslinked polymer, 0.1 mol% azobisisobutyronitrile (CAS 78-67-1), together with 40 wt% aluminium nitride (CAS 24304-00-5) with respect to the total weight of the added compounds. The solution is placed into a mold together with a battery setup and was polymerized. After polymerization, the solid-solid phase change material forms a polymer layer around the battery setup, wherein said layer shows high thermal conductivity and high cooling efficiency.

Hence, in summary it is noted that the solid-solid phase change materials according to the invention hold immense utility across various domains, particularly in temperature regulation and heat energy storage. These materials underscore an environmentally conscious approach to temperature adjustment and provide a sustainable solution for both cooling and heating applications. The remarkable phase change materials rely on a leakproof structure achieved by their macromolecular design. Moreover, the materials exhibit the remarkable ability to regulate temperature autonomously, devoid of any reliance on electricity or fuel consumption. Owing to its polymer network and intrinsic solid-solid phase transition properties, the concern of leakages can be eliminated, and the need for encapsulation is obviated, resulting in a lightweight and cost-effective solution. Additionally, thanks to its tunable macromolecular structure, the mechanical and thermal performance can be easily adjusted by molecular parameters such as crosslinking degree, and a length of the side chains. The materials showcase an impressive latent heat capacity and a distinct amorphization temperature range and furthermore allow the incorporation of additives such as flame retardants and thermal conductive agents. The materials are also characterized by cost efficiency, which is achieved, inter alia, by the readily available and producible monomers and a streamlined, easy-to-manufacture one-pot manufacturing process. Moreover, the materials are compatible with diverse substrates, such as wood, fabric, metal, and plastic and show versatility with regard to their forms. For instance, the materials according to the invention can be provided in a variety of forms, encompassing films, coatings, composites, etc., which renders the materials the applicable in various industries.

**Claims**

1. A material for storing thermal energy comprising or consisting of a crosslinked polymer, wherein the crosslinked polymer comprises:

   - backbone chains,
   - crosslinking chains, and
   - side chains,
   wherein the crosslinking chains link the backbone chains to one another,
   wherein the side chains are attached to one site of the backbone chains,
   **characterized in that** the side chains comprise a phase-change moiety,
   wherein the phase-change moiety is configured to change between a first solid state and a second solid state.

2. The material according to claim 1, wherein the material is leakproof and/or lacks an encapsulation.

3. The material according to any one of the preceding claims, wherein the side chains have a degree of polymerization being 4 or more, such as 20 or more, for instance 40 or more, and/or
   wherein a number-average molecular weight of the side chains is 500 or more, such as 1000 or more, for instance 2000 or more.

4. The material according to any one of the preceding claims, wherein a degree of polymerization of the crosslinking chains is 1 or more, such as 4 or more, for instance 10 or more, and/or
   wherein a degree of crosslinking is in the range of 0.001% to 10%.

5. The material according to any one of the preceding claims, wherein the material further comprises free chains,

   wherein the free chains are not chemically bonded to the backbone chains and/or the side chains, and/or
   wherein the free chains have a molecular weight of 5000 g/mol or more, such as 8000 g/mol or more, and/or
   wherein a weight percentage of the free chains with respect to a total weight of the compounds providing the material is 10% or more, for instance 20% or more such as 50 % or more.

6. The material according to any one of the preceding claims, wherein at least one of:

   - the backbone chains together with the side chains have a total amount by weight of 99 % or less, with respect to a total weight of the compounds forming the crosslinked polymer,
   - a percentage of a number of repeating units of the backbone chains connected to the side chains comprising the phase-change moiety to a total number of repeating units of the crosslinked polymer preferably is in the range of 80% to 100%,
   - the crosslinking chains have an amount by weight of 0.001 % or more and/or of 10 % or less with respect to a total weight of the compounds forming the crosslinked polymer, or
   - the crosslinking chains have a number-average molecular weight of 300 or more and/or the degree of polymerization of the crosslinking chains preferably is 1 or more.

7. The material according to any one of the preceding claims, wherein the side chains are formed from side chains-forming compounds selected from the group comprising or consisting of:

- alcohols having a number of carbon atoms being equal to or larger than 4,
- alkanes, for instance acyclic saturated hydrocarbons or n-alkane hydrocarbons and preferably having a number of carbon atoms being equal to or larger than 5,
- fatty acids preferably having a number of carbon atoms being equal to or larger than 4,
- esters having a number of carbon atoms being equal to or larger than 4,
- polyethers having a number of repeating units being equal to or larger than 4,
- derivatives thereof, and
- mixtures thereof.

8. The material according to any one of the preceding claims, wherein the crosslinking chains are formed from crosslinking-chains forming compounds selected from the group comprising or consisting of:

- difunctional or multifunctional molecules comprising functional groups able to undergo a covalent-bonded or non-covalent-bonded chemical reaction with the backbone chains,
- carboxylic acids, preferably unsaturated carboxylic acids such as acrylic acid or methacrylic acids,
- alcohols having a number of carbon atoms being equal to or larger than 1,
- polyethers having a number of repeating units being equal to or larger than 4,
- derivatives thereof such as acrylates or methacrylates, or
- mixtures thereof.

9. The material according to any one of the preceding claims, wherein the backbone chains are formed from backbone-chains forming compounds selected from the group comprising or consisting of: carboxylic acids, unsaturated aromatic hydrocarbons, amide groups, carbonate groups, ester groups, silanes, acrylonitrile groups, imide groups, isocyanate groups, anhydride groups, epoxy groups, hydroxyl groups, derivatives thereof such as acrylates or methacrylates, or mixtures thereof.

10. The material according to any one of the preceding claims, wherein the backbone chains are selected from the group comprising or consisting of: polyurethane, polystyrene, polyamides, polycarbonates, polyesters, polyacrylonitrile, polyimides and mixtures thereof.

11. The material according to any one of the preceding claims, wherein, upon a change of the phase-change moiety between the first solid state and the second solid state, at least one of:

- the material is configured to absorb and/or release a latent heat of at least 130 J/g,
- the material is configured to exhibit a heat loss of 15 % or less, or
- the material is configured to exhibit a supercooling temperature of 25 °C or less.

12. The material according to any one of the preceding claims, wherein the crosslinked polymer further comprises at least one additive selected from the group comprising or consisting of flame retardants, heat conductive agents, filler, fibers, elastomer, plasticizer, processing aid, mold release, lubricant, dye, pigment, antixoidants, or light stabilizers.

13. Use of the material of any one of the preceding claims for storing thermal energy.

14. A heat-storage object comprising the material according to any one of the preceding claims, wherein the material is formed into a film or sheet, and/or
wherein the heat-storage object is a fabric, a cloth, a building material, an electric appliance, or an electronic appliance.

15. A method for producing the material for thermal energy storage according to any one of claims 1-12, wherein said method comprises:

- Polymerizing backbone-chains forming compounds in the presence of one or more crosslinking-chains forming compounds to produce a crosslinked polymer, and

wherein one or more side chains-forming compounds comprising the phase-change moiety are attached to the backbone-chains forming compounds prior to their polymerisation, or
wherein one or more side chains-forming compounds comprising the phase-change moiety are attached to the backbone chains after the polymerisation of the backbone chains forming compounds.

## EUROPEAN SEARCH REPORT

**Application Number**

EP 24 17 8454

### DOCUMENTS CONSIDERED TO BE RELEVANT

| Category | Citation of document with indication, where appropriate, of relevant passages | Relevant to claim |
|---|---|---|
| X | US 2017/130112 A1 (HARTMANN MARK [US] ET AL) 11 May 2017 (2017-05-11)<br>* paragraph [0126]; claims; figures 1a-2b, 3, 5; examples *<br>----- | 1-15 |
| A | SUNDARARAJAN SWATI ET AL: "Thermal Energy Storage Using Poly(ethylene glycol) Incorporated Hyperbranched Polyurethane as Solid-Solid Phase Change Material", INDUSTRIAL & ENGINEERING CHEMISTRY RESEARCH,<br>vol. 56, no. 49,<br>4 December 2017 (2017-12-04), pages 14401-14409, XP093218472,<br>ISSN: 0888-5885, DOI: 10.1021/acs.iecr.7b03330<br>* the whole document *<br>----- | 1-15 |

**CLASSIFICATION OF THE APPLICATION (IPC)**

INV.
C09K5/06

**TECHNICAL FIELDS SEARCHED (IPC)**

C09K
G02F

The present search report has been drawn up for all claims

| Place of search | Date of completion of the search | Examiner |
|---|---|---|
| The Hague | 6 November 2024 | Schoenhentz, Jérôme |

## ANNEX TO THE EUROPEAN SEARCH REPORT
## ON EUROPEAN PATENT APPLICATION NO.

EP 24 17 8454

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | Publication date |
|---|---|---|---|
| US 2017130112 A1 | 11-05-2017 | BR 112012026529 A2 | 10-10-2017 |
| | | CN 103038260 A | 10-04-2013 |
| | | EP 2558504 A1 | 20-02-2013 |
| | | JP 6189888 B2 | 30-08-2017 |
| | | JP 2013525518 A | 20-06-2013 |
| | | JP 2015134931 A | 27-07-2015 |
| | | US 2010264353 A1 | 21-10-2010 |
| | | US 2013040526 A1 | 14-02-2013 |
| | | US 2017130112 A1 | 11-05-2017 |
| | | US 2019359871 A1 | 28-11-2019 |
| | | WO 2011129854 A1 | 20-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1857520 A1

- EP 1484378 A1

### Non-patent literature cited in the description

- *CHEMICAL ABSTRACTS*, 142-90-5
- *CHEMICAL ABSTRACTS*, 25852-47-5
- *CHEMICAL ABSTRACTS*, 78-67-1
- *CHEMICAL ABSTRACTS*, 9004-74-4
- *CHEMICAL ABSTRACTS*, 21645-51-2
- *CHEMICAL ABSTRACTS*, 24304-00-5